# EUROPEAN PATENT APPLICATION

(11) **EP 3 182 389 A1**
(43) Date of publication of application: **21.06.2017**
(21) Application number: 16201286.8
(22) Date of filing: 29.11.2016
(51) Int. Cl.: G08B 13/191, G08B 13/193, G08B 17/113, G08B 17/12

(54) **CEILING MOUNTED MOTION DETECTOR WITH PIR SIGNAL ENHANCEMENT**

(30) Priority: 15.12.2015 US 201514969078
(71) Applicant: Honeywell International Inc., Morris Plains, NJ 07950 (US)
(72) Inventor: XU, Haidong, Morris Plains, NJ New Jersey 07950 (US); ZHAO, Jie, Morris Plains, NJ New Jersey 07950 (US); LV, JianHui, Morris Plains, NJ New Jersey 07950 (US)
(74) Representative: Houghton, Mark Phillip

(57) **Abstract**

A system including a pyroelectric sensor (56) further including an enclosure (58), a positive pyroelectric sensing element (72) located within the enclosure, a negative pyroelectric sensing element (64) located adjacent the positive pyroelectric sensing element within the enclosure and a window (60) disposed in the enclosure having an elongated shape with a width (3) of the window parallel to a line joining the respective centers of the sensing elements and the length perpendicular to the line wherein the window is centered over the sensing elements to conduct infrared energy from an external source onto the sensing elements and wherein the width (3) of the window is less than the combined widths (1) of the sensing elements plus any space (70) separating the sensing elements.

## Description

### FIELD

This application relates to security systems and more particular to security systems.

### BACKGROUND

Systems are known to protect people and assets within secured areas. Such systems are typically based upon the use of one more sensors that detect threats within the areas.

Threats to people and assets may originate from any of number of different sources. For example, a fire may kill or injure occupants who have become trapped by a fire in a home. Similarly, carbon monoxide from a fire may kill people in their sleep.

Alternatively, an unauthorized intruder, such as a burglar, may present a threat to assets within the area. Intruders have also been known to injure or kill people living within the area.

In the case of intruders, sensors may be placed in different areas based upon the respective uses of those areas. For example, if people are present during some portions of a normal day and not at other times, then sensors may be placed along a periphery of the space to provide protection while the space is occupied while additional sensors may be placed within an interior of the space and used when the space is not occupied.

In most cases, threat detectors are connected to a local control panel. In the event of a threat detected via one of the sensors, the control panel may sound a local audible alarm. The control panel may also send a signal to a central monitoring station.

While conventional security systems work well, it is sometimes difficult to detect intruders in open areas within a building or where a room has a low ceiling. Accordingly, a need exists for better methods and apparatus for passively detecting intruders.

### BRIEF DESCRIPTION OF THE DRAWINGS

FIG. 1 illustrates a block diagram of a security system in accordance herewith;
FIG. 2 is an intrusion sensor assembly used by the system of FIG. 1;
FIG. 3 illustrates a pyroelectric sensor of the assembly of FIG. 2;
FIG. 4 is a cut-away details of the sensor of FIG. 3;
FIG. 5 illustrates a mirror assembly used with the detector assembly of FIG. 2;
FIG. 6 illustrates signal outputs of the assembly of FIG. 2 during a walk-test; and
FIG. 7 illustrates comparative results of various features of the sensor assembly.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

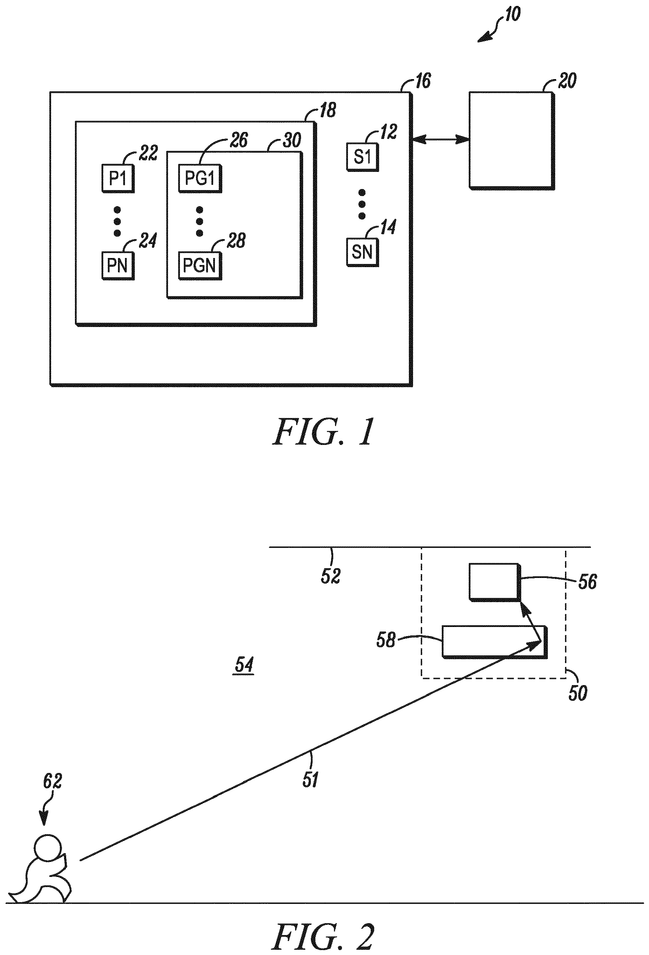

FIG. 1 depicts a security system 10 shown generally in accordance with an illustrated embodiment. Included within the system is a number of sensors 12, 14 that detect threats (e.g., a human intruder) within a secured geographic area 16.

The sensors may be embodied in any of a number of different forms. For example, at least some of the sensors may be switches placed on the doors and/or windows providing entrance into and egress from the secured area. Other sensors may be passive infrared (PIR) sensor placed within the area to detect intruder who have been able to circumvent the sensors placed along the periphery of the secured area.

Also included within the system is a control panel 18 that monitors the sensors. Upon detecting the activation of one of the sensors, the control panel sends an alarm signal to a central monitoring station 20. The central monitoring station may respond by summoning the police.

Included within the control panel and each of the sensors may be one or more processor apparatus (processors) 22, 24 operating under control of one or more computer programs 26, 28 loaded from a non-transitory computer readable medium (memory) 30. As used herein, reference to a step performed by computer program is also reference to the processor that executed that step.

For example, one of the processor may be an alarm processor that monitors the sensors. Upon activation of one of the sensors, the alarm processor may compose an alarm message to be sent to the central monitoring station. The message may include an identifier of the alarm system (e.g., address, account number, etc.), an identifier of the type of sensor, a location within the secured area and the time.

FIG. 2 illustrates the use of a PIR sensor assembly 50 used as one of the sensors shown in FIG. 1. The PIR sensor 50 is mounted to a ceiling 52 within the secured area 54.

Included within the PIR assembly may be a differential PIR device 56 and a mirror assembly 58. As shown, infrared energy 51 from an intruder 62 is reflected by the mirror assembly into the PIR device. In this regard, the mirror assembly significantly increases the lateral range of the PIR sensor assembly over conventional PIR detectors.

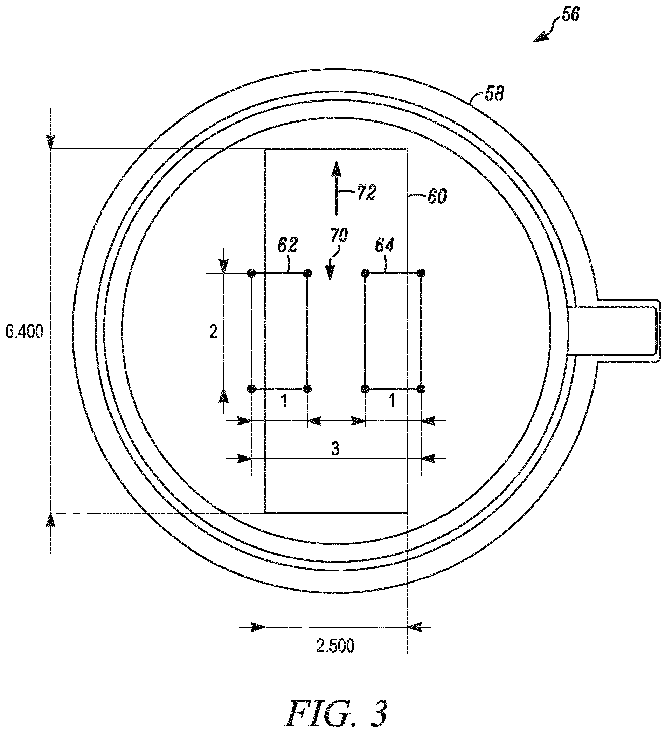

FIG. 3 illustrates an example of of the PIR device of FIG. 2. As shown, the PIR device includes a first, positive infrared detecting element 62 and a second negative infrared detecting element 64 carried within a housing 58. An infrared window 60 carried by the housing allows infrared energy originating from outside of the PIR device (e.g., from the intruder of FIG. 2) to pass through an outer surface of the housing and impinge upon one or more of the PIR elements.

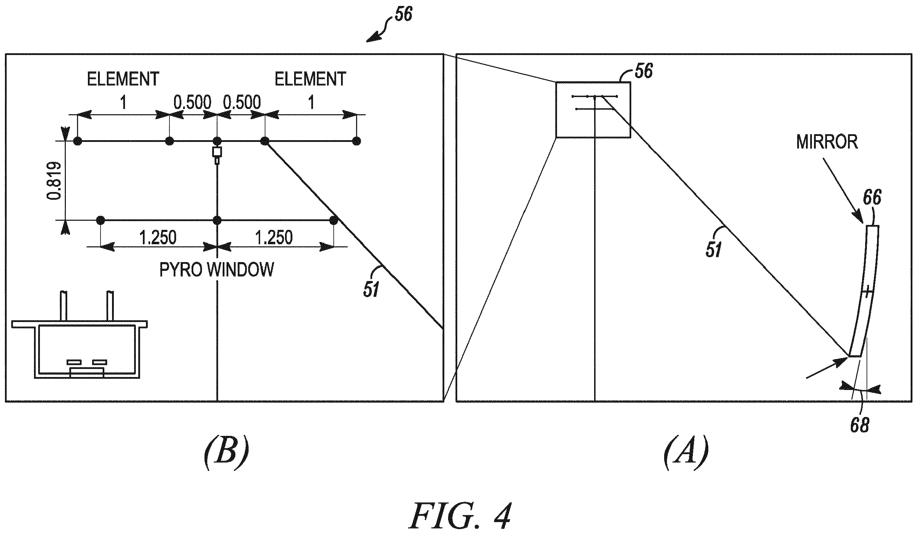

FIG. 4A shows a simplified example of the PIR device and a mirror 66 of the mirror assembly shown in FIG. 2. FIG. 4B shows an enlarged side cut-away view of the PIR device. As can be seen from FIG. 4A, the mirror has been tilted from the vertical plane by a small angle 68. The small angle or tilt determines the range of detection of the PIR sensor assembly for some particular mounting height above the floor.

As may also be noted from FIGs. 3 and 4, the window has a longitudinal shape where the length 72 is parallel to a space 70 between the PIR elements. It should also be noted that the width of the window is significantly less than the combined widths of the two PIR elements plus the space between the PIR elements. The use of the relatively narrow window causes one of the PIR elements to be masked proximate the limits of the detection range of the PIR sensor assembly. This masking improves the signal strength of the IR signal at the limits of the detection range of the device.

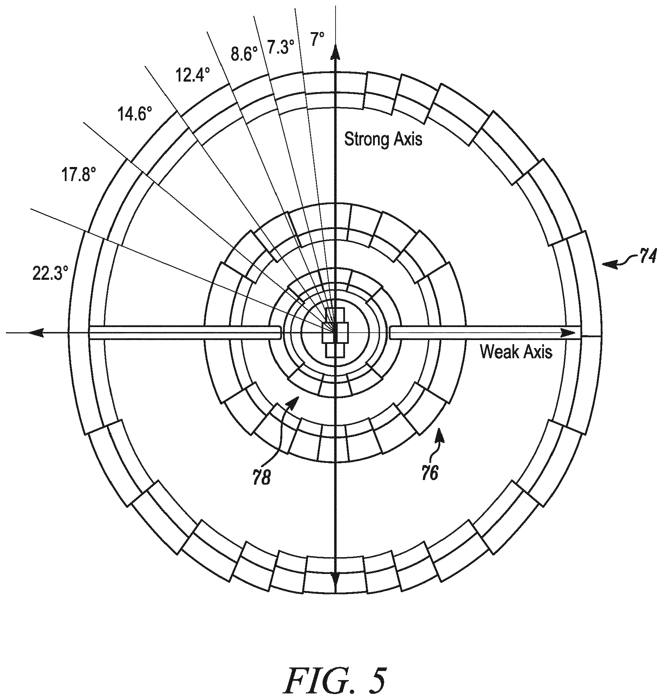

FIG. 4 shows one element of the mirror assembly of FIG. 2 surrounding the two PIR detection elements shown in FIG. 4. As shown in FIG. 5, the mirror assembly may include a number of rings 74, 76, 78, each made up of mirrors arranged in a circle. The mirror assembly of FIG. 5 may be used in applications where the desired range is 9 meters and the mounting height of the PIR assembly is 4.3 meters above the floor. If the detection range is larger than 20 meters and the ceiling height is greater than 6 meters then 4 set of rings may be used. If the detection range is less than 25 meters and the ceiling height is less than 3.6 meters then 2 set of rings may be used.

In general, each of the rings generally has the shape of an annulus with the reflective surface of the mirrors on an inside of the annulus. In the example shown in FIG. 5, the outer ring may have 28 mirrors.

Under one illustrated embodiment, the widths of the mirrors in the direction around the annulus may be gradually adjusted to improve the signal response. For example, the mirrors along the weak axis on opposing ends of the horizontal line shown in FIG. 5 (transverse to the length of the longitudinal window) may be 3 times the width of the mirrors on the top and bottom.

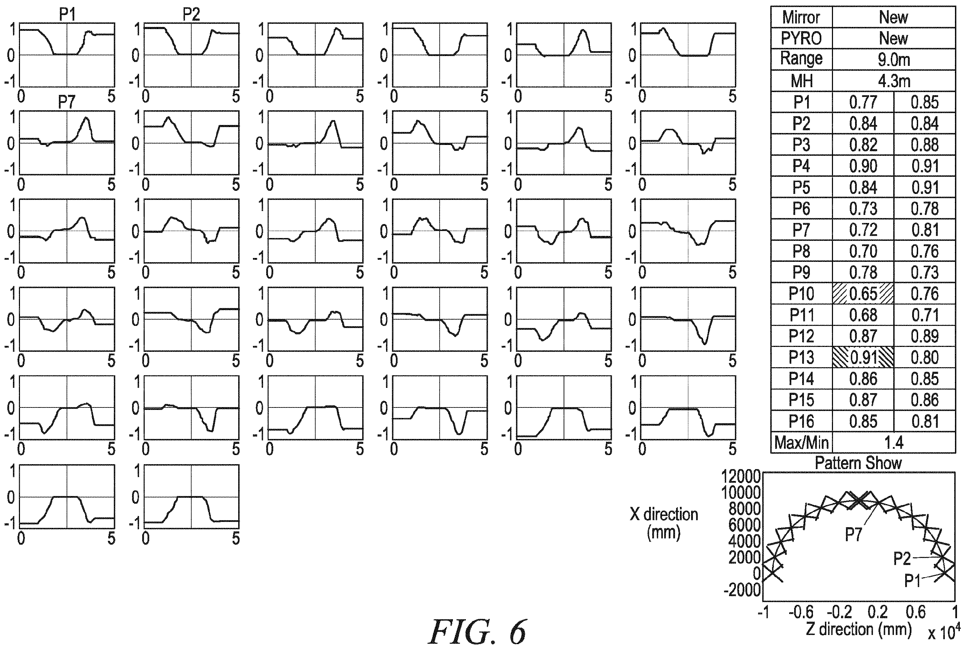

FIG. 6 shows the signal responses of the PIR device to a person walk-testing the device. The small map in the lower right corner of FIG. 6 shows the path of the person criss-crossing the maximum range (radius) of 9 meters. As shown in the map on the lower right corner, the person crosses the maximum range 16 times along each hemisphere thereby providing 32 test points. The 32 graphs on the center-left side of FIG. 6 shows the signal response of the PIR device to the walk-test.

As may be observed, graph P1 shows that the PIR device provides a negative-going pulse in response to the person crossing the maximum range threshold. This negative-going pulse shows the response of the negative PIR element where the positive PIR element has been masked by the window. Graphs P7-P10 show positive and negative portions of the pulse where the PIR elements is only partially masked.

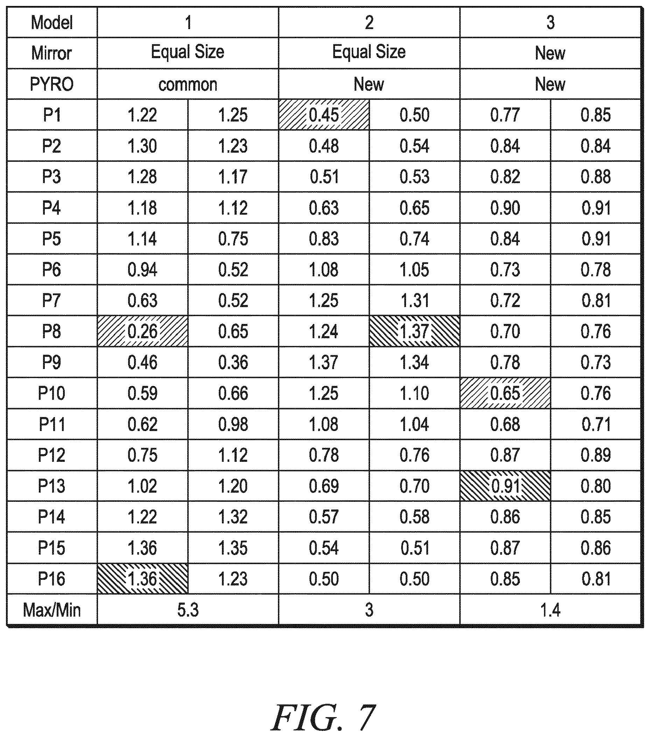

FIG. 7 shows a comparison of the walk-test results for three different embodiments of the PIR sensor assembly. Example number 1 (on the left side) shows the results using a convention PIR device (where the window has not been narrowed to mask one of the PIR elements). Example number 2 (center) shows the modified PIR device with a narrow window and equal sized mirrors. Example number 3 shows the optimal result using the narrowed window and varying mirror widths.

In general, conventional PIR sensors are widely used in ceiling mounted motion detection. However, the requirement for 360 degree operation is a serious challenge for reliable operation based upon conventional technology. Because the PIR detection elements are not rotationally symmetric, there are significant differences in performance based upon the direction from which an intruder approaches the detector. For example, where the detection range is greater than 12 meters, there is clearly a strong and a weak axis in the detection capabilities of such devices. Because of the differences between the strong and weak axis, missed intruders are inevitable.

Past efforts to solve the problem of differences in signal strength have involved the use of multiple pyro element designs (e.g., 3 pyros, 4 pyros, etc.), so that each pyro detects only 120 degrees (3 pyros) or 90 degrees (4 pyros) instead of the 360 degrees required. However, multiple pyros involve designs requiring multiple optical components, circuits and mechanical support and such designs increase the cost and exacerbate the difficulty of compressing the size of such devices.

The PIR sensor assembly of FIG. 2 includes a novel mirror and pyro design which solves the problem of asymmetric operation of two pyro designs. Using the novel design, an intruder moving from any direction relative to the PIR device will generate the same level of intensity in the output signal.

In general, the PIR assembly of FIG. 2 provides a number of important advantages. For example, the assembly provides a significant improvement in performance by shifting wasted signal energy from the strong axis to the weak axis, thereby avoiding missed alarms and false alarms. The new assembly provides 360 degrees of coverage and passes all applicable regulatory standards without missed alarms. The assembly requires only a single pair of PIR elements without the expense and difficulty of quad element pyros, dual channel pyros, etc. The PIR device has a small physical size (e.g., less than 60 mm wide by 25 mm high), thereby providing a very compact size compared to other products in the 18 meter range.

FIG. 7 illustrates the advantages of the design. From FIG. 1 (model number 1, left set of 2 columns), it may be observed that although the sizes of the mirrors are equal, the energy outputs from each zone are quite different. For example, the maximum is approximately 6 times the minimum. There is a strong area and a weak area depending upon the orientation of the pyro. The minimum data of model number 1 is too low which could easily cause missed alarms and the maximum is too large which could easily cause false alarms.

Model 2 (FIG. 7, middle 2 columns) uses equal size mirrors and the optimized PIR device. As may be noted, Model 2 is a significant improvement in terms of signal levels.

Model 3 (FIG. 7, right 2 columns) further improves the performance. Model 3 includes an optimized pyro window to suppress common mode effects that would otherwise enhance the differential signal effects along the strong axis. (This is because the pyro device is a differential device using positive and negative PIR elements.) Model 3 balances the sizes of the mirrors by widening the mirrors on the weak axis and reducing the width of the mirrors on the strong axis.

Model 1 has a strong zone (P1 to P4 and P13 to P16) and a weak zone (P7 to P11). Some walk points of model 1 provide almost no signal at all. The new design of model 3 improves the weak points, balances the maximum and minimums and provides the detector assembly with a more stable performance.

Model 3 provides 2 main benefits. By limiting the width of the window common mode effects are suppressed. The asymmetric mirror design eliminates the asymmetric signal response of the pyro element.

The pyro design of model 1 has a wide angle window. When wide angle windows are used in ceiling mounted PIR detector assemblies, the pyros' positive element and negative element in the weak zone will see an intruder at the same time. Because the pyro is a differential element, the output signal will be very low. To solve this problem, models 2 and 3 blind one element. Accordingly, a feature of the pyro of models 2 and 3 is that in the weak zone, the window will stop the energy that isn't wanted to improve overall performance.

To achieve the masking of one PIR element, the width of the window is reduced. The width of the window can have a significant effect on the ability of the new pyro to blind one element. If the window is too small, the pass-through energy is too low to generate an alarm. Otherwise, if the size is too large, it cannot suppress the common mode.

The width of the window is also considered in combination with the mirrors. FIG. 4 illustrates the principles of the width selection. Here, 2.5 mm has been found to provide the best results. The length of the window is not as important. In general, the longer the window, the better.

Next, the size of each mirror is considered. The width of the mirrors, in part, controls the pyro's performance in each zone. There are two features of the new mirror assembly. First, the size (width of the mirrors) in the strong zone is small and gradually increases from the strong zone to the weak zone. All the mirrors in the same tier have the same height, so they have different widths (using angle, in part, to describe the width). Second, the width of the largest one (width of the widest mirror) near the weak axis is three times the width of the smallest one near the strong axis (ignoring the beam's occupation of the length of the mirror). FIG. 5 shows only one quarter of the 28 mirrors because they are symmetric.

In general, the system uses a pyroelectric sensor assembly having an enclosure, a positive pyroelectric sensing element located within the enclosure, a negative pyroelectric sensing element located adjacent the positive pyroelectric sensing element within the enclosure and a window disposed in the enclosure having an elongated shape with a width of the window parallel to a line joining the respective centers of the sensing elements and the length perpendicular to the line wherein the window is centered over the sensing elements to conduct infrared energy from an external source onto the sensing elements and wherein the width of the window is less than the combined widths of the sensing elements plus any space separating the sensing elements.

Alternatively, the system uses a pyroelectric sensor assembly having an enclosure, a first pyroelectric sensing element located within the enclosure, a second pyroelectric sensing element located adjacent the positive pyroelectric sensing element within the enclosure, a window disposed in the enclosure having an elongated shape with a width of the window parallel to a line joining the respective centers of the sensing elements and the length perpendicular to the line wherein the window is centered over the sensing elements to conduct infrared energy from an external source onto the sensing elements and wherein the width of the window is less than the combined widths of the sensing elements plus any space separating the sensing elements and a plurality of mirrors arranged outside the enclosure adjacent the window that reflects incident light onto the first and second pyroelectric elements.

Alternatively, the system includes a security system that protects a secured geographic area, a pyroelectric sensor assembly that detects threats within the secured area, the pyroelectric sensor assembly further including an enclosure, a first pyroelectric sensing element located within the enclosure, a second pyroelectric sensing element located adjacent the positive pyroelectric sensing element within the enclosure and a window disposed in the enclosure having an elongated shape with a width of the window parallel to a line joining the respective centers of the sensing elements and the length perpendicular to the line wherein the window is centered over the sensing elements to conduct infrared energy from an external source onto the sensing elements and wherein the width of the window is less than the combined widths of the sensing elements plus any space separating the sensing elements and a plurality of mirrors arranged outside the enclosure adjacent the window that reflects incident light onto the first and second pyroelectric elements.

From the foregoing, it will be observed that numerous variations and modifications may be effected without departing from the spirit and scope hereof. It is to be understood that no limitation with respect to the specific apparatus illustrated herein is intended or should be inferred. It is, of course, intended to cover by the appended claims all such modifications as fall within the scope of the claims. Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. An apparatus comprising:
a pyroelectric sensor further comprising:
an enclosure;
a positive pyroelectric sensing element located within the enclosure;
a negative pyroelectric sensing element located adjacent the positive pyroelectric sensing element within the enclosure; and
a window disposed in the enclosure having an elongated shape with a width of the window parallel to a line joining the respective centers of the sensing elements and the length perpendicular to the line wherein the window is centered over the sensing elements to conduct infrared energy from an external source onto the sensing elements and wherein the width of the window is less than the combined widths of the sensing elements plus any space separating the sensing elements.

2. The apparatus as in claim 1 further comprising a plurality of mirrors offset from the enclosure and that form an annulus around the window with a reflective surface on an inside of the annulus that reflect infrared energy through the window onto the sensing elements.

3. The apparatus as in claim 2 wherein the plurality of mirrors further comprises a plurality of rings around the sensing elements, each forming a respective annulus.

4. The apparatus as in claim 3 wherein the plurality of rings further comprises 3.

5. The apparatus as in claim 2 wherein a width of the plurality of mirrors gradually increases around the annulus from a minimum on a side facing the longitudinal end of the window to a maximum on the longitudinal side of the window.

6. The apparatus as in claim 5 wherein a ratio of the maximum width to minimum with further comprises a value of 3.

7. The apparatus as in claim 1 wherein the pyroelectric sensor further comprises an intrusion detector.

8. The apparatus as in claim 1 further comprising a security system.

9. An apparatus comprising:
a pyroelectric sensor further comprising:
an enclosure;
a first pyroelectric sensing element located within the enclosure;
a second pyroelectric sensing element located adjacent the positive pyroelectric sensing element within the enclosure;
a window disposed in the enclosure having an elongated shape with a width of the window parallel to a line joining the respective centers of the sensing elements and the length perpendicular to the line wherein the window is centered over the sensing elements to conduct infrared energy from an external source onto the sensing elements and wherein the width of the window is less than the combined widths of the sensing elements plus any space separating the sensing elements; and
a plurality of mirrors arranged outside the enclosure adjacent the window that reflects incident light onto the first and second pyroelectric elements.

10. The apparatus as in claim 9 wherein the first and second pyroelectric sensors further comprise a differential pyroelectric sensor.

11. The apparatus as in claim 9 wherein the plurality of mirrors further comprises a mirror assembly offset from the enclosure and formed into an annulus around the window with a reflective surface on an inside of the annulus that reflect infrared energy through the window onto the sensing elements.

12. The apparatus as in claim 11 wherein the plurality of mirrors further comprises a plurality of rings around the sensing elements, each forming a respective annulus.

13. The apparatus as in claim 12 wherein the plurality of rings further comprises 3.

14. The apparatus as in claim 11 wherein a width of the plurality of mirrors gradually increases around the annulus from a minimum on a side facing the longitudinal end of the window to a maximum on the longitudinal side of the window.

15. The apparatus as in claim 14 wherein a ratio of the maximum width to minimum with further comprises a value of 3.
